# EUROPÄISCHE PATENTSCHRIFT

(11) **EP 2 891 827 B1**
(45) Veröffentlichungstag und Bekanntmachung des Hinweises auf die Patenterteilung: **19.06.2019**
(21) Anmeldenummer: 13004215.3
(22) Anmeldetag: 27.08.2013
(51) Int. Cl.: F16H 25/22, F16H 25/20, B64C 13/28, B64C 13/42

(54) **Elektromechanisch betätigte Entkoppelvorrichtung für Aktuatoren**
Electromechanically actuated decoupling device for actuators
Dispositif de découplage à actionnement électromécanique pour actionneurs

(30) Priorität: 12.08.2013 EP 13004003
(43) Veröffentlichungstag der Anmeldung: 08.07.2015
(73) Patentinhaber: Airbus Defence and Space GmbH, 85521 Ottobrunn (DE)
(72) Erfinder: Naubert, Alexander, 81927 München (DE); Christmann, Markus, 81375 München (DE)
(74) Vertreter: LKGLOBAL Lorenz & Kopf PartG mbB Patentanwälte

(56) Entgegenhaltungen:
- EP-A2- 2 532 583
- FR-A1- 2 895 482
- US-A1- 2011 226 075

## Beschreibung

Die vorliegende Erfindung betrifft Luftfahrzeugtechnologie. Insbesondere betrifft die vorliegende Erfindung Aktuatortechnologie für aerodynamisch wirksame Elemente eines Luftfahrzeuges. Weiter insbesondere betrifft die vorliegende Erfindung ein Aktuatorelement mit einer reversiblen Entkoppelungsvorrichtung, eine Aktuatoranordnung sowie ein Luftfahrzeug, insbesondere Flugzeug oder Helikopter.

Aktuatoren finden in Luftfahrzeugen Verwendung, um Elemente der Luftfahrzeuge mechanisch zu bewegen und in ihrer Position bzw. Lage zu verändern. Bei Flugzeugen sind dies beispielsweise Ruderflächen oder Elemente der Tragflächen, um das Auftriebsverhalten der Flugzeuge zu beeinflussen. Bei Helikoptern kann dies beispielsweise die unterschiedliche Rotorblattanstellung durch eine Taumelscheibe betreffen.

Herkömmlich werden derartige Aktuatoren als Hydraulikelemente ausgeführt, da diese Technologie seit langem beherrschbar und wenig fehleranfällig ist. Im Fehlerfall können herkömmliche Hydraulik-Aktuatoren meist noch bewegt werden, in anderen Worten, blockieren im Fehlerfall nicht.

Durch die zunehmende Elektrifizierung von Luftfahrzeugen ist es gewünscht, hydraulische Aktuatoren, welche möglicherweise ein im gesamten Luftfahrzeug verlaufendes Hydrauliksystem benötigen, durch elektrische Aktuatoren zu ersetzen. Diese können rein elektrisch versorgt werden, wobei derartige elektrische Leitungen regelmäßig einfacher in einem Luftfahrzeug zu verlegen und zu warten sind als beispielsweise Hydraulikleitungen. Weiterhin ermöglicht eine elektrische Leistungs- bzw. Energieübertragung eine Gewichtsersparnis gegenüber einer hydraulischen. Eine Bewegungserzeugung eines solchen elektrischen Aktuators kann nun ebenfalls rein elektrisch, zum Beispiel mit Hilfe eines geeigneten Antriebes durch einen Elektromotor, realisiert werden oder aber es kann ein lokales Hydrauliksystem am Aktuator vorgesehen sein, insbesondere ein im Aktuatorsystem angeordnetes Hydrauliksystem, welches gleichfalls nur extern mit elektrischer Energie versorgt werden muss.

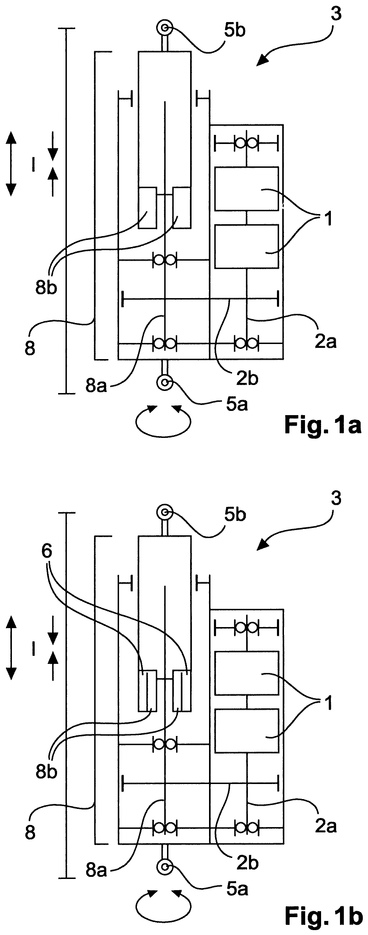

Figur 1a zeigt eine schematische Darstellung eines elektromechanischen Aktuators.

Exemplarisch zwei Motorelemente 1 sind unter Verwendung einer geeigneten Anbindung, bestehend aus Motorwelle 2a und einer geeigneten Übertragung 2b an der Antriebseinheit 8 des Aktuatorelementes 3 angebunden. Die Antriebseinheit 8 ist in ihrer Länge l veränderbar, insbesondere in ihrem Abstand zwischen den beiden Anbindungspunkten 5a,b, so dass eine Längenänderung der Antriebseinheit 8 des Aktuatorelementes 3 den Abstand zwischen den Anbindungspunkten 5a,b verändert. Durch eine geeignete Einspannung zwischen Elementen ist somit beispielsweise ein Bewegen oder Verkippen beispielsweise einer aerodynamischen wirksamen Struktur möglich. Die Antriebseinheit 8 besteht aus einem ersten Antriebselement 8a und einem zweiten Antriebselement 8b, beispielsweise aufgebaut als ein Kugelgewindetrieb 8 mit Kugelgewindemutter 8b und Kugelgewindespindel 8a. Durch eine Rotation der Kugelgewindespindel 8a ist die Kugelgewindemutter 8b auf dieser verschiebbar, so dass die Rotation der Kugelgewindespindel 8a eine Längenänderung der Antriebseinheit 8 und damit des Aktuatorelementes 3 bzw. eine Veränderung des Abstandes zwischen den Anbindungspunkten 5a,b bereitstellt. Im Falle eines Defektes eines Aktuatorelementes, insbesondere bei missionskritischen aerodynamisch wirksamen Flächen, muss sichergestellt sein, dass diese trotz des Defektes zumindest weiterhin bewegt werden können. Im Falle, dass ein Aktuatorelement ausfällt, wird meist, je nach konkretem Einsatz, eine gewisse Redundanz vorgesehen. Im Falle von Leitwerken oder Rudern kann beispielsweise ein zweites Aktuatorelement kraftparallel zum ersten angeordnet sein, so dass die Lageänderung der aerodynamisch wirksamen Fläche von einem der beiden oder auch von beiden Aktuatorelementen zusammen wahrgenommen werden kann.

Fällt nun ein Aktuatorelement der zwei parallelen Aktuatorelemente aus, so kann das andere die Funktion zumindest aufrechterhalten. Besonders relevant in diesem Zusammenhang sind jedoch Defekte von Aktuatorelementen, die es nachfolgend nicht mehr ermöglichen, eine Längenänderung durchzuführen; beispielsweise der Bruch einer Kugel des Kugelgewindetriebs kann möglicherweise die Kugelgewindespindel und die Kugelgewindemutter gegeneinander blockieren, so dass eine Längenänderung des Aktuatorelementes nicht mehr möglich ist In solch einem Fall kann eine Steuerung der aerodynamisch wirksamen Fläche auch nicht durch das parallel angeordnete Aktuatorelement durchgeführt werden. Schlimmstenfalls wäre das Luftfahrzeug dadurch nicht mehr steuerbar und würde möglicherweise abstürzen. Um elektromechanische Aktuatorelemente weiterhin, auch im Fehlerfall, zumindest durch eine Kraft von außen in ihrer Länge veränderbar zu halten, können Entkoppelungsvorrichtungen bzw. Entkoppelungsmechanismen in die Aktuatorelemente integriert werden, welche in einem Fehlerfall durch eine Entkoppelung des blockierten Aktuatorelementes die Blockierung aufheben und damit sicher stellen, dass die aerodynamisch wirksame Fläche beweglich und durch Kraftwirkung des parallel angeordneten Elements steuerbar bleibt.

Figur 1b zeigt eine exemplarische Ausgestaltung eines derartigen Aktuatorelementes. Letztendlich unterscheidet sich die Ausgestaltung der Figur 1b zu der Figur 1a nur durch das Vorsehen einer Entkoppelungsvorrichtung 6. Entkoppelungsvorrichtung 6 entkoppelt dabei nicht lediglich die beiden Antriebselemente 8a,b voneinander, vielmehr wird eine Entkoppelung dergestalt vorgenommen, so dass eine Entkoppelung der Angriffspunkte 5a,b erfolgt, wobei einer der Angriffspunkte auch im entkoppelten Zustand im Wesentlichen mit beiden Antriebselementen der Antriebseinheit verbunden ist, während die Verbindung eines Antriebselementes zum zweiten Angriffspunkt 5b gelöst wird. Hierdurch kann sich die Länge eines Aktuatorelementes unabhängig davon verändern, ob ein Mechanismus der Antriebseinheit, beispielsweise das erste Antriebselement 8a zum zweiten Antriebselement 8b, blockiert ist.

Aus der EP 2 532 583 ist ein teleskopischer Aktuator bekannt, der eine Entkoppelungsvorrichtung aufweist, bei der Pratzen mit Endstücken, die Unterschneidungen bilden, in einem eingekoppelten Zustand in eine Rille eingreifen, die in einer Mutter eines Spindeltriebs ausgebildet sind. Die Entkoppelungsvorrichtung lässt sich von außerhalb des Aktuators durch ein rotatorisches Betätigungselement betätigen.

Es ist Aufgabe der vorliegenden Erfindung, eine alternative konstruktive Ausgestaltung einer reversiblen Entkoppelungsvorrichtung für ein elektromechanisches Aktuatorelement bereitzustellen.

Demgemäß wird ein Aktuatorelement mit einer reversiblen Entkoppelungsvorrichtung, gemäß dem unabhängigen Anspruch 1 eine Aktuatoranordnung sowie ein Luftfahrzeug, insbesondere Flugzeug oder Helikopter gemäß den Ansprüchen 10 und 12 angezeigt. Bevorzugte Ausgestaltungen ergeben sich aus den abhängigen Ansprüchen.

Gemäß einer weiteren Ausgestaltung der vorliegenden Erfindung wird eine Aktuatoranordnung angezeigt mit zumindest zwei Aktuatorelementen gemäß der vorliegenden Erfindung, wobei die zumindest zwei Aktuatorelemente kraftparallel angeordnet sind, so dass eine Längenveränderung der Aktuatoranordnung von einem Aktuatorelement allein oder von beiden Aktuatorelementen parallel bewirkbar ist. Gemäß einer weiteren Ausgestaltung der vorliegenden Erfindung wird ein Luftfahrzeug, insbesondere Flugzeug oder Helikopter, mit einer Aktuatoranordnung gemäß der vorliegenden Erfindung und/oder einem Aktuatorelement gemäß der vorliegenden Erfindung angezeigt.

Herkömmliche Aktuatorelemente für die Ansteuerung aerodynamisch wirksamer Elemente weisen entweder keine Entkoppelungsvorrichtung auf oder nur eine solche auf, die möglicherweise nur eine irreversible Entkoppelung bzw. eine Entkoppelung, welche nur mit einem erhöhten Arbeitsaufwand wieder eingekoppelt werden kann, bereitstellt. Da es sich bei elektromechanischen Aktuatorelementen mit Entkoppelvorrichtung, die aerodynamisch wirksame Elemente ansteuern, jedoch um missionskritische Elemente handeln mag, die im Fehlerfall möglicherweise zu einem Absturz des Fluggerätes führen, ist ein regelmäßiger Test einer Entkoppelungsvorrichtung, somit die Simulation des Fehlerfalls zur Sicherstellung des korrekten Betriebes im Fehlerfall erstrebenswert. Elektromechanische Aktuatorelemente, welche nicht mit geringem Arbeitsaufwand wieder eingekoppelt werden können, sind somit möglicherweise nicht in regelmäßigen Abständen testbar. Hierdurch mag sich nicht sicherstellen lassen, dass eine herkömmliche Entkoppelungsvorrichtung im Notfall einwandfrei funktioniert und damit die Erhaltung der Flugfähigkeit eines Fluggerätes sicherstellt.

Demgegenüber wird in der vorliegenden Erfindung ein Aktuatorelement mit einer Entkoppelungsvorrichtung angezeigt, welches nach einer Auslösung auf einfache Weise wieder in einen gekoppelten Zustand überführbar ist. Ein Aktuator mit einer derart reversiblen Entkoppelungsvorrichtung mag nun regelmäßig, beispielsweise während eines ausführlichen Tests vor dem Betrieb eines Luftfahrzeuges, auf seine korrekte Funktionsweise überprüft werden. Während des Tests kann somit die Entkoppelungsvorrichtung unter Last ausgelöst, das Aktuatorelement somit entkoppelt werden, wodurch das worst case Szenario das Flugbetriebes nachgestellt werden mag. Am Ende des Testlaufs kann das, noch funktionsfähige, Aktuatorelement einfach wieder eingekoppelt werden und stellt dadurch seinen normalen Betrieb bereit.

Kern der vorliegenden Erfindung ist dabei die Ankoppelung eines Ausgangskolbens mit einer Antriebseinheit des Aktuatorelementes dergestalt, dass die Abgangswelle formschlüssig mit einem Antriebselement der Antriebseinheit verbunden ist. Dies stellt den normalen Betriebsmodus dar. Die Antriebseinheit weist ein erstes Antriebselement und ein zweites Antriebselement auf, welche funktional derart zusammenwirken, dass durch die Antriebseinheit eine Längenänderung des Aktuatorelementes bereitstellbar ist. Durch die formschlüssige Ankoppelung des Ausgangskolbens mit einem der Antriebselemente wird die Längenänderung des Aktuatorelementes bereitgestellt. Die beiden Anbindungspunkte eines Aktuatorelementes, welche letztendlich die wirksame Länge des Aktuatorelementes darstellen, können somit am Ausgangskolben einerseits und andererseits am Aktuatorelement selbst angeordnet werden, beispielsweise an seinem Gehäuse. Somit ist ein Anbindungspunkt fest mit dem Gehäuse des Aktuatorelementes verbunden, während der zweite Anbindungspunkt über den Ausgangskolben angebunden und darüber mit der Antriebseinheit verbunden ist. Der Ausgangskolben ist einer Translationsbewegung unterwerfbar, wodurch das Aktuatorelement in seiner Länge einstellbar ist.

In eingekoppeltem Zustand der Entkoppelungsvorrichtung ist nun der Ausgangskolben formschlüssig mit der Antriebseinheit bzw. einem Antriebselement der selbigen verbunden. In einem Fehlerfall bzw. Entkoppelungsfall mag nun der Formschluss zwischen Ausgangskolben und Antriebselement der Antriebseinheit gelöst werden. Dadurch mag das Aktuatorelement eine Entkoppelung von Antriebseinheit und Ausgangskolben erfahren, so dass die Länge des Aktuatorelementes durch vergleichsweise geringe Kraftzufuhr von außen einstellbar ist. In einem Fehlerfall, in dem das Aktuatorelement somit entkoppelt ist, stellt dieses, trotz seines Defektes, keine blockierte Vorrichtung dar, welche möglicherweise zur negativen Beeinflussung der Steuerungsfähigkeit eines Fluggerätes führen könnte.

Derartige Aktuatorelemente sind meist in Form einer Aktuatoranordnung vorgesehen, welche eine gewisse Redundanz für die Ansteuerung bzw. Positionierung von aerodynamisch wirksamen Elementen vorsieht. Z.B. können zwei Aktuatorelemente kraftparallel bzw. wirkparallel angeordnet sein, so dass die Position und Orientierung des aerodynamisch wirksamen Elementes von jedem der Aktuatorelemente getrennt bewirkbar ist oder aber diese zusammenwirken mögen, wodurch eine Kraft von beiden Aktuatorelementen aufbringbar ist. Im Fehlerfall, d. h. im Falle, dass eines der Aktuatorelemente einen Defekt aufweist und nicht mehr funktionsfähig ist, schlimmstenfalls blockiert, so dass eine Längenänderung nicht mehr möglich ist, kann die erfindungsgemäße Entkoppelungsvorrichtung das Aktuatorelement derart entkoppeln, so dass eine Längenänderung des Aktuatorelementes durch eine von außen aufgebrachte Kraft bewirkbar ist. In diesem Fall könnte das defekte Aktuatorelement entkoppelt werden und stellt somit für das parallel angeordnete zweite Aktuatorelement keine Einschränkung der Ansteuerbarkeit des aerodynamisch wirksamen Elementes dar, abgesehen von einem geringfügigen Kraftaufwand für die Längenänderung des defekten Aktuatorelementes. Somit kann die Ansteuerbarkeit der aerodynamisch wirksamen Fläche weiterhin sichergestellt sein, trotz des schlimmstenfalls blockierenden Defektes eines der beiden wirkparallel bzw. kraftparallel angeordneten Aktuatorelemente.

Gemäß einer bevorzugten Ausgestaltung der vorliegenden Erfindung mag die Antriebseinheit ausgebildet sein als ein Kugelgewindetrieb, wobei das erste Antriebselement und das zweite Antriebselement ausgebildet sein mögen als Kugelgewindespindel und Kugelgewindemutter des Kugelgewindetriebs. Zur Einstellung der Längenänderung eines Aktuatorelementes gibt es verschiedene Implementierungsmöglichkeiten. Meist wird im Luftfahrtbereich eine Ausgestaltung als Kugelgewindetrieb oder Rollengewindetrieb gewählt, da diese vergleichsweise robust sind und hohe Kräfte reibungs- bzw. verschleißarm übertragen können. Ein Kugelgewindeantrieb besteht dabei regelmäßig aus einer Spindel sowie einer Kugelgewindemutter. Verschiedene Implementierungen sehen nun das Bewegen, das Drehen, der Kugelgewindespindel vor, während eine gegen Verdrehung gesicherte Kugelgewindemutter auf der Kugelgewindespindel verschoben wird. Eine andere Ausgestaltung sieht vor, die Kugelgewindemutter zu rotieren, während die Kugelgewindespindel dadurch eine Translation parallel zur Rotationsachse vollzieht.

Gemäß einer weiteren bevorzugten Ausgestaltung der vorliegenden Erfindung mag das Aktuatorelement weiterhin ein Motorelement aufweisen, wobei die Kugelgewindemutter unter Verwendung des Motorelementes rotierbar ist, wodurch eine Längenveränderung des Aktuatorelementes durch Translation der Kugelgewindespindel ausführbar ist. Gemäß einer weiteren bevorzugten Ausgestaltung der vorliegenden Erfindung mag das Formschlusselement mit dem Ausgangskolben in formschlüssigen Eingriff bringbar sein, so dass die Translation der Kugelgewindespindel eine Translation des Ausgangskolbens hervorruft. Die vorliegende Erfindung betrifft insbesondere eine Ausgestaltung, bei der die Kugelgewindemutter rotiert, während die Kugelgewindespindel translatorisch bewegt und hierüber die Länge des Aktuatorelementes eingestellt wird. Für eine bevorzugte Entkoppelung der Antriebselemente der Antriebseinheit soll die Entkoppelungsvorrichtung nach Möglichkeit nicht die Antriebselemente selbst auftrennen, da dies insbesondere im Falle eines Kugelgewindetriebs oder Planetenrollengewindetriebs im Fehlerfall möglicherweise nicht jederzeit sicherstellbar ist. Hierzu wird ein Anbindungspunkt mit der Antriebseinheit verbunden, der zweite Anbindungspunkt über ein weiteres Element mit dem anderen Antriebselement verbunden wird, während die Entkoppelungsvorrichtung bzw. der Entkoppelungsmechanismus eine, insbesondere formschlüssige, Anbindung von Antriebselement und weiterem Element mit Anbindungspunkt dergestalt entkoppelt, so dass eine Längenänderungsmöglichkeit durch eine externe Kraft auf das Aktuatorelement im entkoppelten Zustand auch im Falle einer vollständigen Blockade von erstem Antriebselement und zweitem Antriebselement durch Auftrennen der Verbindung zwischen Antriebselement und weiterem Element sichergestellt werden kann. Die Entkoppelungsvorrichtung bzw. der Entkoppelungsmechanismus ist dabei bevorzugt zwischen einem ersten Zustand, einem geschlossenen Zustand, in dem das Formschlusselement geschlossen ist, und einem zweiten Zustand, einem geöffneten Zustand, in dem das Formschlusselement einen gelösten Formschluss aufweist, versetzbar.

Gemäß einer weiteren bevorzugten Ausgestaltung der vorliegenden Erfindung mag die Spindel als eine Hohlspindel ausgebildet sein, wobei der Ausgangskolben im Inneren der Spindel angeordnet ist. Das Aktuatorelement der vorliegenden Erfindung weist somit eine Antriebseinheit mit einem Kugelgewindetrieb, insbesondere einer rotierenden Spindelmutter, und einer translatorisch bewegten Spindel auf, an welcher ein Ausgangskolben unter Verwendung des Entkoppelungsmechanismus formschlüssig angebunden ist, wobei an dem Ausgangskolben der zweite Anbindungspunkt angeordnet ist. Die Spindel kann dabei beispielsweise als Hohlspindel ausgebildet sein, in deren Innenraum der Ausgangskolben angeordnet ist. Ohne Formschluss des Formschlusselementes mag der Ausgangskolben im Wesentlichen frei verschiebbar sein im Inneren der Spindel, während der Ausgangskolben im formgeschlossenen Zustand des Formschlusselementes fest mit der Spindel in Verbindung steht und sich bei Drehung der Spindelmutter mit der Spindel translatorisch bewegt. Im formschlussgelösten Zustand kann der Ausgangskolben mit vergleichsweise geringer Kraft im Inneren der Spindel verschoben werden.

Gemäß einer weiteren bevorzugten Ausgestaltung der vorliegenden Erfindung mag in der ersten Position des Halteelementes ein Formschluss zwischen dem Ausgangskolben und der Spindel bereitgestellt sein, während in der zweiten Position des Halteelementes der Formschluss zwischen dem Ausgangskolben und der Spindel gelöst und die Abgangswelle im Inneren der Spindel im Wesentlichen frei verschiebbar ist. Somit kann über das Halteelement einfach zwischen einem formgeschlossenen Zustand und einem nicht formgeschlossenen Zustand des Formschlusselementes umgeschaltet werden. Das Halteelement zusammen mit dem Formschlusselement wirken dabei bevorzugt nicht in dieselbe Kraftrichtung, die auf das Aktuatorelement aufgrund einer Längung bzw. Verkürzung wirken mag. Besonders bevorzugt ist die Ausbildung einer Kraft des Halteelementes auf das Formschlusselement zur Bereitstellung des Formschlusses im Wesentlichen senkrecht zur durch das Aktuatorelement aufgrund seiner Längung bzw. Verkürzung bereitgestellten Kraft. Hierdurch kann die durch das Halteelement bereitgestellte Kraft sich im Wesentlichen auf das Halten des Formschlusses beschränken und muss nicht gleichzeitig derart stabil ausgelegt sein, auch der Kraft widerstehen zu können, welche das Aktuatorelement bei Längung bzw. Verkürzung aufbringt. Somit ist die Kraft des Haltelementes von der Kraft des Aktuatorelementes entkoppelt.

Gemäß der vorliegenden Erfindung ist das Formschlusselement ausgebildet als eine Mehrzahl von Kugelelementen, wobei der Ausgangskolben zu den Kugelelementen korrespondierende Vertiefungen aufweist, wobei das Halteelement ausgebildet ist als ein Hülsenelement mit Vertiefungen, wobei das Hülsenelement unter Verwendung des Antriebselementes des Entkoppelungsmechanismus rotierbar ist, wobei das Hülsenelement in der ersten Position eingerichtet ist, die Kugelelemente in den Vertiefungen des Ausgangskolbens zu halten zum Bereitstellen des Formschlusses zwischen Ausgangskolben und Spindel und wobei das Hülsenelement in der zweiten Position eingerichtet ist, die Kugelelemente in den Vertiefungen des Hülsenelementes aufzunehmen, so dass der Formschluss gelöst ist. Die Formschlusselemente können somit zwischen einer ersten, formgeschlossenen Position, in welcher sie in den Vertiefungen des Ausgangskolbens angeordnet sind, und einer zweiten, formgelösten Position, in welcher sie in den Vertiefungen des Hülsenelementes angeordnet sind, versetzt werden. Das Hülsenelement mag somit eine, vergleichsweise geringe, Rotation ausführen und im Wesentlichen zwischen einer Position, in der die Vertiefungen des Hülsenelementes mit den Formschlusselementen fluchten, und einer Position, in der die Formschlusselemente in die korrespondierenden Vertiefungen des Ausgangskolbens gedrückt bzw. gehalten werden, verschwenkt werden. Hierdurch ist auch eine bevorzugte Lösung des Formschlusses unter Last möglich, da aufgrund der Ausgestaltung der Formschlusselemente als Kugelelemente keine blockierenden Oberflächen auftreten können. Sobald die Vertiefungen des Hülsenelementes mit den Kugelelementen fluchten, werden diese aufgrund der Form der Kugeloberfläche aus den korrespondierenden Vertiefungen des Ausgangskolbens in die Vertiefungen des Hülsenelementes gedrückt und lösen den Formschluss.

Gemäß einer weiteren bevorzugten Ausgestaltung der vorliegenden Erfindung mag das Aktuatorelement weiterhin ein Gehäuse und eine Dichtelementeanordnung aufweisen, wobei die Dichtelementeanordnung derart eingerichtet ist, so dass der Bereich von Formschlusselement, Halteelement, Ausgangskolben und Gehäuse im Wesentlichen dicht ausgebildet ist, so dass insbesondere der Bereich mit einem geeigneten Schmiermittel füllbar ist. Durch eine solche Anordnung mag eine Reibung im Entkoppelungsmechanismus weiter reduziert werden, so dass die Auslösekraft des Entkoppelungsmechanismus vergleichsweise gering ist. Durch die dichte Ausgestaltung des Bereichs der Dichtelementeanordnung mag dieser darüber hinaus im Wesentlichen wartungsfrei ausgebildet sein.

Gemäß einer weiteren bevorzugten Ausgestaltung der vorliegenden Erfindung mag das Aktuatorelement weiterhin Stangendichtungen aufweisen, wobei unter Verwendung der Stangendichtungen eine Dichtwirkung für das Schmiermittel im Wesentlichen auch während eines Tests bereitgestellt wird. Somit kann wiederholt ein Test der Entkoppelungsvorrichtung durchgeführt zu werden ohne möglicherweise eine Funktionsbeeinträchtigung im Fehlerfall zu riskieren.

Gemäß einer weiteren bevorzugten Ausgestaltung der vorliegenden Erfindung mag einer der Anbindungspunkte an einem Gehäuseende des Aktuators angeordnet sein, während der weitere Anbindungspunkt am außenliegenden Ende des Ausgangskolbens angeordnet ist. Dadurch sind die beiden Anbindungspunkte, welche die effektive Länge des Aktuatorelementes ausbilden, an gegenüberliegenden Enden des Aktuatorelementes angeordnet, während weiterhin eine einfache Entkoppelung von Ausgangskolben und im Aktuatorelement vorgesehenen Elementen, wie beispielsweise einzelne Antriebselemente, durch die Entkoppelungsvorrichtung bzw. den Entkoppelungsmechanismus bereitstellbar ist.

Gemäß einer weiteren bevorzugten Ausgestaltung der vorliegenden Erfindung mag die Entkoppelungsvorrichtung im Verlauf eines Tests entkoppelbar sein und nach Abschluss des Tests wieder einkoppelbar sein. Hierdurch kann ein zyklischer Funktionstest bezüglich der Notfallentkoppelung des Aktuatorelementes durchgeführt werden und insbesondere sichergestellt sein, dass das Aktuatorelement bzw. dessen Entkoppelungsvorrichtung auch im kritischen Fehlerfall während des Flugbetriebes eine Entkoppelung durchführen kann und nicht blockiert.

Gemäß einer weiteren bevorzugten Ausgestaltung der vorliegenden Erfindung mag die Entkoppelungsvorrichtung im Falle eines Defektes einer Antriebseinheit oder des Kugelgewindetriebs bzw. Planetenrollengewindetriebs eines Aktuatorelementes den Entkoppelungsmechanismus des Aktuatorelementes auslösen, so dass das Aktuatorelement funktional entkoppelt wird, wobei die Längenveränderung der Aktuatoranordnung weiterhin vom nicht entkoppelten Aktuatorelement bewirkbar ist. Die erfindungsgemäße Entkoppelungsvorrichtung stellt somit sicher, dass die Verschiebbarkeit eines Aktuatorelementes von außen auch im Defektfall, im schlimmsten Fall im Blockierungsfall von erstem und zweitem Antriebselement zueinander, sichergestellt ist, so dass das verbleibende, redundante, parallel angeordnete zweite Aktuatorelement das aerodynamisch wirksame Element weiterhin einstellen kann, ohne negativ vom defekten Aktuatorelement beeinflusst zu werden.

Gemäß einer weiteren bevorzugten Ausgestaltung der vorliegenden Erfindung mag eine leitfähige Verbindungen zwischen Entkoppelungsvorrichtung und einem Luftfahrzeug ausschließlich zum stationären Teil der Entkoppelungsvorrichtung führbar sein, so dass eine Bewegung des beweglichen Teils der Entkoppelvorrichtung keine Beweglichkeit der leitfähigen Verbindungen bedingt. Durch die mechanische Übertragung der Rotation durch die Schwenkhülse vom stationären zum beweglichen Teil der Entkoppelvorrichtung bzw. des Elementes können alle Anschlüsse des Elementes, insbesondere einschließlich aller Anschlüsse der Entkoppelvorrichtung, jeweils umfassend Anschlüsse zur Leistungsübertragung sowie zur Übertragung von Sensorsignalen von/zur zugehörigen Steuerung/Überwachung im stationären Teil des Elementes angebracht sein. Damit entfällt die Notwendigkeit eines speziellen Designs des Kabelbaumes zur Kompensation einer eventuellen Relativbewegung, die mit zusätzlichem Aufwand, Kosten und potentiell reduzierter Zuverlässigkeit verbunden wäre.

Nachfolgend wird anhand der beigefügten Zeichnungen näher auf Ausführungsbeispiele der Erfindung eingegangen. Es zeigen:
- **Fig. 1a,b**: eine schematische Darstellung eines elektromechanischen Aktuators;
- **Fig. 2**: eine schematische Darstellung eines elektromechanischen Aktuators gemäß der vorliegenden Erfindung;
- **Fig. 3a-c**: eine exemplarische Ausgestaltung der Entkoppelungsvorrichtung gemäß der vorliegenden Erfindung in verriegeltem, formgeschlossenen Zustand;
- **Fig. 4a-c**: eine exemplarische Ausgestaltung der Entkoppelungsvorrichtung gemäß der vorliegenden Erfindung in geöffnetem Zustand; und
- **Fig. 5**: eine exemplarische Ausgestaltung einer Aktuatoranordnung gemäß der vorliegenden Erfindung.

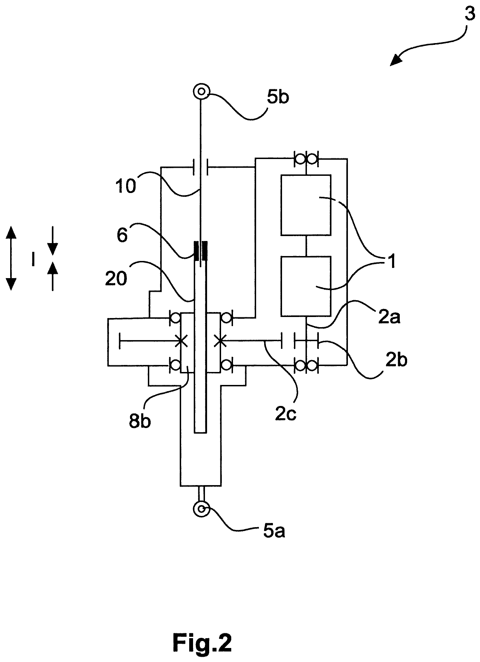

Weiter Bezug nehmend auf Figur 2 wird eine schematische Darstellung eines elektromechanischen Aktuators gemäß der vorliegenden Erfindung dargestellt.

Figur 2 zeigt eine schematische Ausgestaltung eines elektromechanischen Aktuators 3 beispielsweise zur Steuerung der primären Flugsteuerelemente für Hubschrauber. Hierbei sind exemplarisch zwei Motorelemente 1 vorgesehen, die unter Verwendung von Motorwelle 2a und geeigneter Übertragung 2b,c an das zweite Antriebselement 8b, ausgebildet als rotierende Kugelgewindemutter eines Kugelgewindetriebs, angebunden sind. Aktuatorelement 3 ist in seiner Länge I änderbar bzw. einstellbar, insbesondere zwischen den beiden Anbindungspunkten 5a,b, so dass eine Längenänderung des Aktuatorelementes 3 den Abstand zwischen den Anbindungspunkten 5a,b verändert. Kugelgewindemutter 8b ist schematisch dargestellt als rotierendes Element, wodurch sich das erste Antriebselement 20, beispielsweise eine Kugelgewindespindel, in Figur 2 nach oben bzw. nach unten in der rotierenden Kugelgewindemutter 8b verschiebt. Die Kugelgewindespindel 20 ist dabei selbst gegen Rotation zu sichern, beispielsweise unter Vorsehen eines Antirotationselementes, z.B. installiert am unteren Ende der Antriebsspindel 20. Der untere Anbindungspunkt 5a kann beispielsweise an einer geeigneten Luftfahrzeugstruktur angebracht sein, während der obere Anbindungspunkt 5b an der Taumelscheibe eines Hubschraubers angebracht sein kann.

Während des normalen Betriebes ist der Ausgangskolben 10 fest, insbesondere formschlüssig, mit der Kugelgewindespindel 20 verbunden. Eine derartige feste Verbindung bzw. formschlüssige Verbindung kann durch Entkoppelungsvorrichtung 6 bereitgestellt sein. Während des normalen Betriebes rotiert Kugelgewindemutter 8b, hierdurch wird Kugelgewindespindel 20 und durch die formschlüssige Anbindung auch Ausgangskolben 10 parallel zur Rotationsachse der Spindelmutter verschoben, wodurch das Aktuatorelement 3 gelängt bzw. verkürzt, somit der Abstand der Anbindungspunkte 5a,b beeinflusst wird. Im Falle, dass ein mechanischer Defekt in der Antriebseinheit, insbesondere zwischen Antriebselement 8b und Antriebselement 20, auftritt, kann unter Verwendung des Entkoppelungsmechanismus der Entkoppelungsvorrichtung 6 die formschlüssige Verbindung zwischen dem Antriebselement 20 und der Abgangswelle 10 gelöst werden. Hierdurch kann Ausgangskolben 10 im Inneren der als Hohlspindel ausgebildeten Kugelgewindespindel 20 verschoben werden, wodurch die effektive Länge bzw. der Abstand zwischen den Anbindungspunkten 5a,b durch eine von außen auf das Aktuatorelement 3 eingebrachte Kraft eingestellt werden kann. Diese Kraft kann beispielsweise von einem kraftparallel bzw. wirkparallel angeordneten zweiten Aktuatorelement aufgebracht werden. Im Falle des gelösten Formschlusses zwischen Antriebselement 20 und Ausgangskolben 10 ist Aktuatorelement 3 im Wesentlichen freilaufend, während die Einstellbarkeit einer aerodynamisch wirksamen Fläche unter Verwendung eines zweiten, redundanten, parallel angeordneten Aktuators bereitstellbar ist.

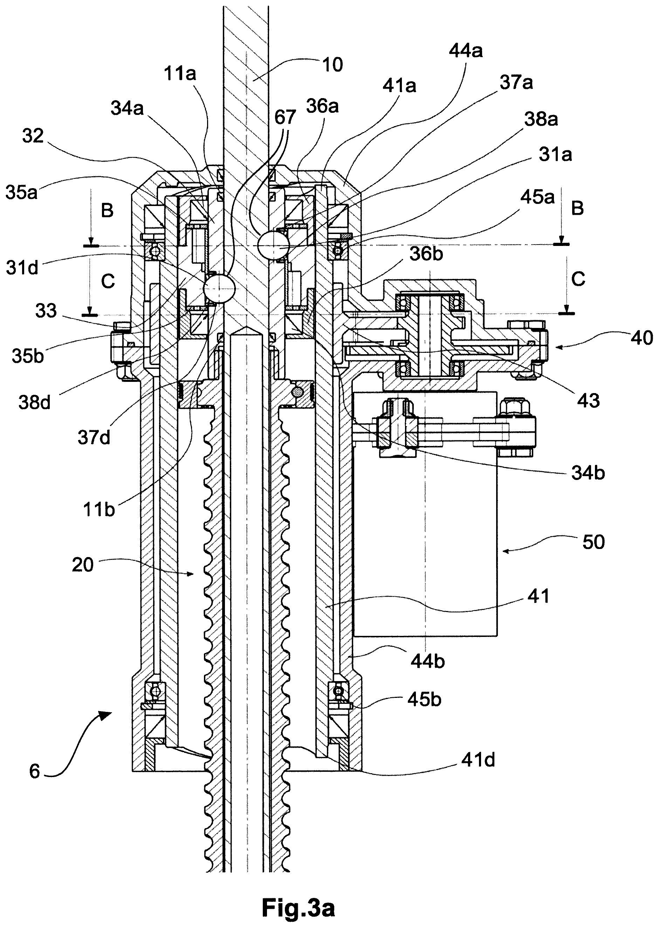

Weiter Bezug nehmend auf Figuren 3a-c wird eine exemplarische Ausgestaltung Entkoppelungsvorrichtung gemäß der vorliegenden Erfindung in verriegeltem, formgeschlossenen Zustand dargestellt.

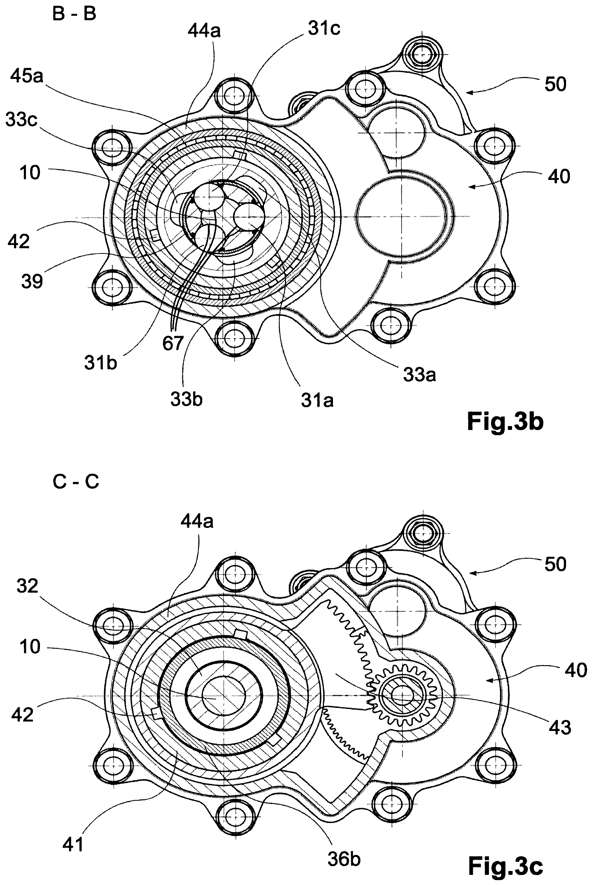

Figur 3a zeigt einen Längsschnitt durch ein erfindungsgemäßes Aktuatorelement 3, während Figuren 3b und 3c Schnitte durch die Ebenen BB und CC darstellen.

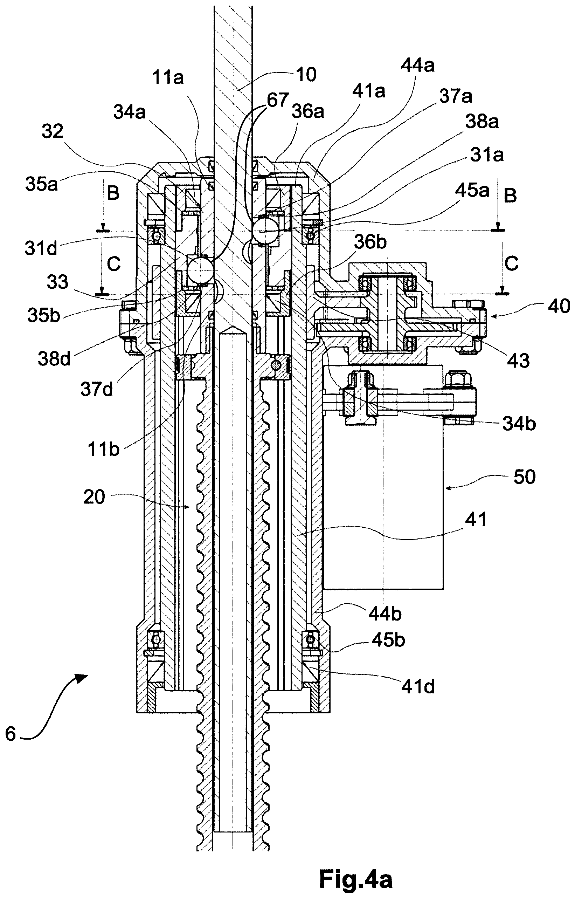

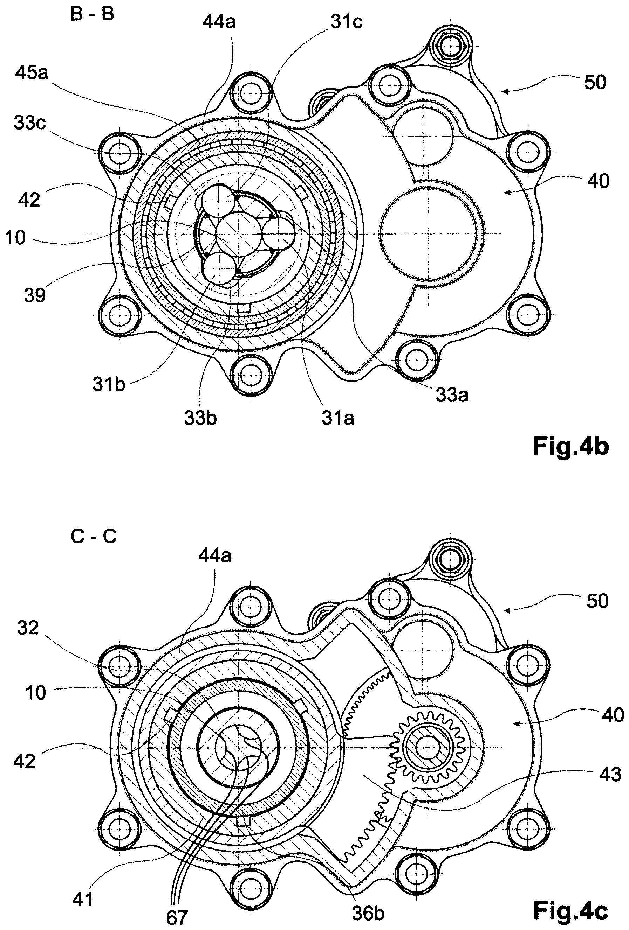

Figur 3 zeigt eine Entkoppelungsvorrichtung 6 mit einer Antriebseinheit, aufweisend eine Kugelgewindespindel 20, welche durch eine rotierende Kugelgewindemutter, in Figur 3a nicht dargestellt, nach oben bzw. nach unten verschoben wird. Kugelgewindespindel 20 ist als Hohlspindel ausgebildet und nimmt im Inneren Ausgangskolben 10 auf. Die einzige Anbindung zwischen Kugelgewindespindel 20 und Ausgangskolben 10 ist der Entkoppelungsmechanismus der Entkoppelungsvorrichtung 6. Der Entkoppelungsmechanismus weist dabei Formschlusselemente, exemplarisch ausgebildet als sechs Kugelelemente 31a-f auf, welche eine formschlüssige Anbindung und damit Kraftübertragung zwischen Kugelgewindespindel 20 und Ausgangskolben 10 bereitstellen. In Figur 3a sind die Formschlusselemente 31a-f in Vertiefungen 67 des Ausgangskolbens 10 angeordnet und gleichzeitig in Adapterelement 32 gehaltert, welches fest mit der Kugelgewindespindel 20 verbunden ist. Somit erfolgt eine Kraftübertragung zwischen Ausgangskolben 10 über die Formschlusselemente 31a-f zu Adapterelement 32 und hierüber zu Kugelgewindespindel 20. Eine Translation der Kugelgewindespindel 20 aufgrund der Rotation der Spindelmutter, in Figur 3a nach oben bzw. unten, führt damit direkt zu einer vergleichbaren Bewegung des Ausgangskolbens 10. Im formgeschlossenen Zustand der Entkoppelungsvorrichtung 6 gemäß Figuren 3a-c greifen somit die Formschlusselemente 31a-f in die Vertiefungen 67 des Ausgangskolbens 10 ein. Formschlusselemente 31a-f werden dort durch eine Verriegelungshülse 33 gehalten, welche in ihrer Anordnung gemäß Figuren 3a-c die Formschlusselemente 31a-f in die Vertiefungen 67 des Ausgangskolbens 10 drückt und dort hält. Verriegelungshülse 33 weist weiterhin Vertiefungen 33a-f auf, welche die Formschlusselemente 31a-f aufnehmen und durch das Abrutschen der Formschlusselemente 31a-f aus den Vertiefungen 67 des Ausgangskolbens 10 den Formschluss lösen. Der Zustand des geöffneten Formschlusses wird nachfolgend unter Bezugnahme auf Figuren 4a-c dargestellt.

Die Verriegelungshülse 33 ist unter Verwendung des Antriebselementes 50 und ggf. einer geeigneten Übersetzung verdrehbar bzw. rotierbar und somit überführbar zwischen einer Position, in der die Formschlusselemente 31a-f in die Vertiefungen 67 des Ausgangskolbens 10 gedrückt werden, und einer Position, in der die Vertiefungen 33a-f derart angeordnet sind, so dass die Formschlusselemente 31a-f aus den Vertiefungen 67 des Ausgangskolbens 10 gleiten können. Die Verriegelungshülse 33 hält somit die Formschlusselemente 31a-f in der ersten Position im Formschluss.

Zwei Rotationsdichtelemente 34a,b, zwei Scheibenelemente 35a,b und zwei Abdeckungen 36a,b sind vorgesehen und verbunden mit der Verriegelungshülse 33 und ergeben zusammen die Hülsenanordnung. Die Verriegelungshülse 33 und Schwenkhülse 41 sind miteinander verbunden durch eine Wellen-Naben-Verbindung 42, welche die relative Rotationsfreiheit einschränkt, jedoch eine relative axiale Bewegung zwischen Ausgangskolben 10, Spindel 20, Adapterelement 32, Formschlusselementen 31a-f und Hülsenanordnung einerseits und Antriebselement 50, Getriebeelement 40 samt Getrieberädern 43, Schwenkhülse 41, Lagern 45a,b und Gehäuse 44a,b andererseits ermöglicht. Im formgeschlossenen Zustand der Entkoppelungsvorrichtung 6 verschiebt sich die Hülsenanordnung im Inneren der Schwenkhülse 41, welche im Inneren des Gehäuses 44a,b durch Wälzlager 45a,b gehalten wird. Antriebselement 50, Getriebeelement 40 samt Getrieberädern 43, Schwenkhülse 41, Lager 45a,b und Gehäuse 44a,b mögen in einer vorteilhaften Ausgestaltung der Erfindung mit Anbindungspunkt 5a und damit beispielsweise dem Rumpf eines Luftfahrzeugs translatorisch festgelegt sein. Selbiges gilt damit auch für alle erforderlichen Verbindungen, insbesondere elektrische Leistungs- und Sensorverbindungen, zwischen Entkoppelvorrichtung und Rumpf.

Weiter Bezug nehmend auf Figuren 4a-c wird eine exemplarische Ausgestaltung der Entriegelungsvorrichtung gemäß der vorliegenden Erfindung in geöffnetem Zustand dargestellt.

Zur Entkoppelung der Entkoppelungsvorrichtung 6, somit zum Öffnen des Formschlusses wird Antriebselement 50, beispielsweise ein elektrischer Motor oder alternativ ein duplexelektrischer Motor mit zwei redundanten Motorelementen auf einer Motorwelle, mit Betriebsenergie versorgt. Die daraus resultierende Drehung des Antriebselementes 50 kann durch ein beispielsweise zweistufiges Stirnradgetriebe 40 bzw. alternativ durch ein oder mehrstufiges Planetengetriebe oder eine Kombination aus Planeten- und Stirnradstufen oder einen anderen geeigneten Getriebemechanismus, verstärkt werden. Getrieberad 43 der zweiten Reduktionsstufe ist verbunden mit der Schwenkhülse 41, welche die Drehung auf die Hülsenanordnung überträgt. Wenn eine bestimmte Kraft, aufgebracht durch die Antriebseinheit 50, erreicht bzw. überschritten ist, wird der Widerstand des Formschlusses, der statischen Reibung der Rotationsdichteelemente 34a,b und die statische Reibung zwischen der Verriegelungshülse 33 und den Formschlusselementen 31a-f überwunden. Antriebselement 50 verschwenkt somit Getrieberad 43 von der in Figur 3c dargestellten Position in die in Figur 4c dargestellte Position, wodurch die Vertiefungen 33a-f im Bereich der Formschlusselemente 31a-31f angeordnet werden und diese aus den Vertiefungen 67 der Abgangswelle 10 gleiten können. Die Kugelelemente 31a-f werden somit durch die Bewegung der Hülsenanordnung freigegeben. Getrieberad 43 mag dabei an der Gehäusewandung, wie in Figur 4c dargestellt, anstehen, was gleichzeitig eine Endposition durch Berührung des Gehäuses darstellen mag. Derartige Bereiche im Gehäuse können durch ein Dämpfungsmaterial, wie zum Beispiel ein Silikongel, ausgekleidet werden.

Bei gelöstem Formschluss gemäß Figuren 4a-c können nun externe Kräfte auf die Aktuatoranordnung die Formschlusselemente 31a-f auswärts in radialer Richtung in die Vertiefungen 33a-f der Verriegelungshülse 33 drücken. Elastische C-Ringe 37a-f mögen im Inneren der Öffnungen des Adapterelements 32 zum Abbremsen der Bewegung der Formschlusselemente 31a-f vorgesehen sein. Die C-Ringe 37a-f mögen eine gewisse Kraft auf die Formschlusselemente 31a-f aufbringen, wodurch diese in Position gehalten werden und insbesondere nicht mehr selbständig in die Vertiefungen 67 des Ausgangskolben 10 zurückgleiten können. Hülsen 38a-f mögen die C-Ringe in den Bohrungen (nicht bezeichnet) des Adapterelementes 32 halten, wobei Hülse 39 in einem Überhangbereich der Hülsenanordnung im entkoppelten Zustand eine axiale Unterstützung bereitstellen mag. Durch den gelösten Formschluss ist eine Kraftübertragung der Antriebseinheit auf den Ausgangskolben 10 unterbunden, Ausgangskolben 10 kann vielmehr im Inneren der als Hohlspindel ausgebildeten Kugelgewindespindel 20 verschoben werden, so dass das Aktuatorelement 3 frei läuft bzw. mit einer von außen wirkenden Kraft in der Länge veränderbar ist. Nach der Entkoppelung mögen die Formschlusselemente 31a-f durch die C-Ringe 37a-f, Hülsen 38a-f und Hülse 39 in den Vertiefungen 33a-f der Verriegelungshülse 33 gehalten werden.

Eine solche Entkoppelung mag nun im Rahmen eines regulären Tests vor einem Flug erfolgen, um sicherzustellen, dass die Entkoppelungsvorrichtung 6 im Fehlerfall einwandfrei funktioniert. Die erfindungsgemäße Entkoppelungsvorrichtung 6 erlaubt dabei die Entkoppelung unter Last.

Nach einer erfolgten Entkoppelung kann nun die Länge des Aktuatorelementes 3 von außen, beispielsweise von einem parallel angeordnete redundanten Aktuatorelement eingestellt werden. Die von außen wirkende Längenänderung verschiebt dabei den Ausgangskolben 10 im Inneren der Kugelgewindespindel 20.

Um nach einem möglichen Test eine Einkoppelung der Entkoppelungsvorrichtung zu ermöglichen, mag unter Verwendung des redundanten, parallel angeordneten Aktuatorelementes die Position des Ausgangskolbens 10 derart eingestellt werden, so dass die Vertiefungen 67 in dem Ausgangskolben 10 im Bereich der Formschlusselemente 31a-f angeordnet sind. Antriebselement 50 mag nun die Verriegelungshülse 30 in die umgekehrte Richtung versetzen, somit von einer Position, wie in Figur 4c dargestellt, in eine Position, wie in Figur 3c dargestellt. Hierdurch werden die Formschlusselemente 31a-f aus den Vertiefungen 33a-f der Verriegelungshülse 33 wieder in die Vertiefungen 67 des Ausgangskolbens 10 verschoben. Verriegelungshülse 33 sichert die Formschlusselemente 31a-f in den Vertiefungen 67 des Ausgangskolbens 10 und stellt damit den formgeschlossenen Zustand wieder her. Ausgangskolben 10 und/oder Kugelgewindespindel 20 können durch geeignete Mittel gegen eine relative Rotation gesichert sein, zum Beispiel ein Pin in einer Vertiefung.

Eine bevorzugte Ausgestaltung der erfindungsgemäßen Entkoppelungsvorrichtung 6 verwendet eine geeignete Schmierung, zum Beispiel Öl, Schmierfett oder dergleichen im Bereich der Formschlusselemente 31a-f. Hierzu können Stangendichtungen 11a,b vorgesehen sein, welche das Schmiermittel im Schmiervolumen halten, insbesondere bei nur einer definierten axialen Relativbewegung zwischen Ausgangskolben 10 und Kugelgewindespindel 20. Insbesondere während eines Tests mag die axiale Bewegung nach Entkoppelung kleiner als ein definierter Grenzwert sein, welcher durch die Stangendichtungen 11a,b bestimmt wird, da andernfalls eine Nachschmierung der Entkoppelungsvorrichtung 6 nötig sein mag. Im Falle eines mechanischen Defektes mag es jedoch irrelevant sein, ob das Schmiermittel das zugewiesene Volumen verlässt, da nach einem tatsächlich auftretenden Defekt das Aktuatorelement 3 regelmäßig ausgetauscht und überholt werden muss.

Alternativ mag das vollständige Volumen im Inneren des Gehäuses des Aktuatorelementes 3 mit einem Schmiermittel, zum Beispiel synthetischem Öl, gefüllt sein. In diesem Fall mögen die Dichtelemente 11a,b,34a,b entfallen. Alternativ sind feste Schmierlösungen denkbar wie beispielsweise geeignete Beschichtungen.

Durch eine geeignete Schmierung mag eine geringe Abnutzung sowie eine erhöhte Lebensdauer der mechanischen Komponenten sowie eine geringe Auslösekraft resultieren. Jede Komponente im erfindungsgemäßen Aktuatorelement mag individuell geschmiert werden, zum Beispiel die Entriegelungsvorrichtung, der Kugelgewindetrieb, oder alternativ ein Planetenrollengewindetrieb, und ein evtl. vorgesehenes Getriebe. Durch eine Aufspaltung und Abgrenzung der einzelnen Schmiervolumina mag eine nachfolgende Fehlerübertragung, beispielsweise mikrometallische Partikel des Getriebes, welche in dem Kugelgewindetrieb einen Defekt auslösen, vermieden werden. Schmiermittel mag auch eine schnelle Bewegung der Formschlusselemente, insbesondere während des Entkoppelungsprozesses, dämpfen.

Die erfindungsgemäße Entkoppelungsvorrichtung ist dabei vorteilhaft fest im bzw. am Gehäuse des elektromechanischen Aktuatorelementes angebracht, wodurch eine robuste und verlässliche Energieübertragung durch mechanische Komponenten von einer festen Position zu den bewegenden Komponenten der Antriebseinheit bereitgestellt ist. Durch die mechanische Übertragung mögen flexible Kabel, welche möglicherweise einer frühzeitigen Alterung unterliegen, entfallen.

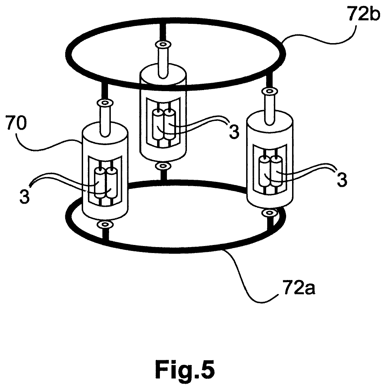

Weiter Bezug nehmend auf Figur 5 wird eine exemplarische Ausgestaltung einer Aktuatoranordnung gemäß der vorliegenden Erfindung dargestellt.

Figur 5 zeigt eine exemplarische Ausgestaltung der Ansteuerung einer Taumelscheibe eines Helikopters, mit drei zwischen der Luftfahrzeugstruktur 72a und einem aerodynamisch wirksamen Element 72b angeordneten Aktuatoranordnungen 70. Das aerodynamisch wirksame Element 72b, die Taumelscheibe eines Helikopters, ermöglicht dabei die stationäre und zyklische Beeinflussung des Anstellwinkels der Rotorblätter, so dass der Helikopter eine der Steuerung entsprechende Bewegungsrichtung einnehmen mag. Taumelscheibe 72b soll dabei in drei Freiheitsgraden verstellbar sein, wozu diese im Wesentlichen frei durch drei Aktuatoranordnungen 70 angesteuert wird. Jede Aktuatoranordnung 70 weist wiederum zwei Aktuatorelemente 3 auf, welche kraftparallel bzw. wirkparallel angeordnet sind. Die Einstellung der effektiven Länge der Aktuatoranordnung 70 kann somit durch beide Aktuatorelemente 3 parallel oder auch nur durch ein einzelnes Aktuatorelement 3 ausgeführt werden.

Im Fehlerfall, dass beispielsweise ein Aktuatorelement 3 einer Aktuatoranordnung 70 einen Defekt aufweist, entkoppelt eine erfindungsgemäße Entkoppelungsvorrichtung die Antriebseinheit des defekten Aktuatorelementes 3, so dass die Längenänderung der Aktuatoranordnung 70 durch das nicht defekte Aktuatorelement 3 einer Aktuatoranordnung 70 alleine bereitstellbar ist. Hierdurch kann auch im Fehlerfall, d. h. im Defektfall eines Aktuatorelementes 3, die Funktionsfähigkeit der Aktuatoranordnung 70 insgesamt sichergestellt werden und dadurch die Positionierbarkeit der Taumelscheibe 72b in ihren 3 Freiheitsgraden. Im Falle eines Tests der Aktuatoranordnung 70 kann eines der Aktuatorelemente 3 entkoppelt werden, während die Längenänderung des entsprechenden Aktuatorelementes 3 durch die wirkparallele bzw. kraftparallele Anordnung des nicht entkoppelten Aktuatorelementes bereitstellbar ist. Auch kann nach erfolgter Entkoppelung eines Aktuatorelementes 3 durch das zweite, nicht entkoppelte Aktuatorelement eine Position bzw. Länge des entkoppelten Aktuatorelementes eingestellt werden, die ein Wiedereinkoppeln des ausgekoppelten Aktuatorelementes 3 ermöglicht.

Ein allgemeiner Aspekt der vorliegenden Erfindung ist dabei, dass die erfindungsgemäße Entkoppelungsvorrichtung derart aufgebaut ist, dass sich zwar die Formschlusselemente und das Halteelement translatorisch mit dem Ausgangskolben 10 und dem Anbindungspunkt 5b bewegen, aber durch Schwenkhülse 41 sichergestellt ist, dass sich die Antriebseinheit 50 und das Getriebe 40im Bezug zum Anbindungspunkt 5a weder translatorisch noch rotatorisch bewegen. Die Schwenkhülse 41 überträgt dabei die Schwenkbewegung vom translatorisch zum Anbindungspunkt 5a festgelegten Getriebe 40 und Antriebseinheit der Entkoppelungsvorrichtung 50 zu den translatorisch zur Spindel sowie im eingekoppelten Zustand der Entkoppelungsvorrichtung 6 zusätzlich zum Ausgangskolben 10 und zum Anbindungspunkt 5b festgelegten Formschlusselementen 31 und Hülsenanordnung 33, 34a,b, 35a,b, 36a,b.

Da Motorelement 1, Kraftübertragungselement 2a-c und das zweite Antriebselement 8b des Elements gem. Fig. 2 ebenfalls zum Anbindungspunkt 5a translatorisch festgelegt sind und dies für eventuelle Sensorik, insbesondere zur Ermittlung von Kraft, rotatorische und translatorische Position sowie Temperatur, ebenfalls bevorzugt so sein mag, mögen alle elektrischen Verbindungen zwischen aktuiertem Element und zugehöriger Steuerung im mit dem Anbindungspunkt 5a stationären System verlaufen und müssen nicht eine rotatorische und/oder translatorische Relativbewegung zwischen aktuiertem Element, beispielsweise einer aerodynamisch wirksamen Fläche, und dem Rumpf des Fluggerätes ausgleichen. Solche Relativbewegungen mögen sonst im Design eines zugehörigen Kabelbaumes berücksichtigt werden und würden dadurch zu zusätzlichem Aufwand, Kosten und potentiell reduzierter Zuverlässigkeit führen.
Sowohl Fig. 3a-c als auch Fig. 4a-c stellen das Element im ausgefahrenem Zustand dar, also bei maximal eingestellter Entfernung zwischen den Anbindungspunkten 5a und 5b. Im eingefahrenen Zustand des Elementes würden sich Ausgangskolben 10, Spindel 20, Adapterelement 32, Formschlusselemente 31a-f und Hülsenanordnung 33, 34a,b, 35a,b, 36a,b bis ans untere Ende der Schwenkhülse 41 verschieben, während Antriebselement 50, Getriebeelement 40 mit Getrieberädern 43, Schwenkhülse 41, Lager 45 und Gehäuse 44 stationär bleiben.

### Bezugszeichenliste

- 1: Motorelement
- 2a,b,c: Kraftübertragung
- 3: Aktuatorelement
- 5a,b: Anbindungspunkte
- 6: Entkoppelungsvorrichtung
- 8: Antriebseinheit/Kugelgewinde/Kugelgewindetrieb
- 8a: erstes Antriebselement/Antriebsspindel/Kugelgewindespindel
- 8b: zweites Antriebselement/Spindelmutter/Kugelgewindemutter
- 10: Ausgangskolben
- 11a,b: Stangendichtungen
- 20: Kugelgewindespindel/Spindel
- 31a-f: Formschlusselemente/Kugelelemente
- 32: Adapterelement
- 33: Verriegelungshülse
- 33a-f: Vertiefungen der Verriegelungshülse
- 34a,b: Rotationsdichtelemente
- 35a,b: Scheibenelemente
- 36a,b: Abdeckung
- 37a-f: C-Ringe
- 38a-f: Hülsen
- 39: Hülse
- 40: Getriebe
- 41: Schwenkhülse
- 42: Wellen-Naben-Verbindung
- 43: Getrieberad
- 44a,b: Gehäuse
- 45a,b: Wälzlager
- 50: Antriebselement/Elektromotor
- 67: Vertiefungen der Abgabewelle
- 70: Aktuatoranordnung
- 72a: Luftfahrzeugstruktur
- 72b: aerodynamisch wirksames Element

## Patentansprüche

1. Aktuatorelement (3), aufweisend
eine Antriebseinheit, aufweisend ein erstes Antriebselement (20) und ein zweites Antriebselement (8b);
wobei das erste Antriebselement (20) und das zweite Antriebselement (8b) derart funktional zusammenwirken, um eine Längenveränderung des Aktuatorelementes (3) zu bewirken;
wobei das Aktuatorelement (3) eine Entkopplungsvorrichtung (6) aufweist, wobei das Aktuatorelement (3) zwei Anbindungspunkte (5a,b) aufweist, deren Abstand durch die Längenänderung des Aktuatorelementes (3) festlegbar ist; wobei einer der Anbindungspunkte (5a, b) fest mit dem Gehäuse des Aktuatorelementes verbunden ist; wobei das Aktuatorelement (3) einen Ausgangskolben (10) aufweist und der zweite Anbindungspunkt über den Ausgangskolben (10) angebunden und darüber mit der Antriebseinheit verbunden ist;
wobei der Abstand der zwei Anbindungspunkte (5a,b) im gekoppelten Zustand der Entkopplungsvorrichtung (6) durch das Aktuatorelement (3) einstellbar ist; und wobei der Abstand der zwei Anbindungspunkte (5a,b) im entkoppelten Zustand der Entkopplungsvorrichtung (6) durch eine Kraftbeaufschlagung der Anbindungspunkte (5a,b) von außen veränderbar ist,
die Entkopplungsvorrichtung (6) aufweisend
einen Entkopplungsmechanismus mit einem Antriebselement (50), einem Formschlusselement (31a-f) und einem Halteelement (33);
wobei das Halteelement (33) eingerichtet ist, eine erste Position einzunehmen, in der das Formschlusselement (31a-f) in einem geschlossenen Zustand ist;
wobei das Halteelement (33) eingerichtet ist, eine zweite Position einzunehmen, in der das Formschlusselement (31a-f) in einem geöffneten Zustand ist;
wobei das Antriebselement (50) eingerichtet ist, das Halteelement (33) zwischen der ersten Position und der zweite Position zu versetzen, wodurch der Formschluss des Formschlusselementes (31a-f) reversibel lösbar und festlegbar ist;
wobei der Entkopplungsmechanismus den Ausgangskolben (10) funktional von einem Antriebselement (8b,20) des Aktuatorelementes (3) entkoppelt, so dass die Längenveränderung des Aktuatorelementes (3) unabhängig von der Antriebseinheit ermöglicht wird, insbesondere ohne funktionale Entkopplung von erstem Antriebselement (20) und zweitem Antriebselement (8b),
**dadurch gekennzeichnet, dass** das Formschlusselement (31a-f) ausgebildet ist als eine Mehrzahl von Kugelelementen;
wobei der Ausgangskolben (10) zu den Kugelelementen (31a-f) korrespondierende Vertiefungen (67) aufweist;
wobei das Halteelement (33) ausgebildet ist als ein Hülsenelement mit Vertiefungen (33a-f);
wobei das Hülsenelement (33) unter Verwendung des Antriebselementes (50) rotierbar ist;
wobei das Hülsenelement (33) in der ersten Position eingerichtet ist, die Formschlusselemente (31a-f) in den Vertiefungen (67) des Ausgangskolbens (10) zu halten zum Bereitstellen des Formschlusses zwischen Ausgangskolben (10) und Kugelgewindespindel (20); und
wobei das Hülsenelement (20) in der zweiten Position eingerichtet ist, die Formschlusselemente (31a-f) in den Vertiefungen (33a-f) des Hülsenelementes (33) aufzunehmen, so dass der Formschluss gelöst ist.

2. Aktuatorelement gemäß Anspruch 1,
wobei die Antriebseinheit ausgebildet ist als ein Kugelgewindetrieb, wobei das erste Antriebselement (20) und das zweite Antriebselement (8b) ausgebildet sind als Kugelgewindespindel und Kugelgewindemutter eines Kugelgewindetriebs.

3. Aktuatorelement gemäß Anspruch 2, weiterhin aufweisend ein Motorelement (1),
wobei die Kugelgewindemutter (8b) unter Verwendung des Motorelementes (1) rotierbar ist, wodurch eine Längenveränderung des Aktuatorelementes (3) durch Translation der Kugelgewindespindel (20) ausführbar ist.

4. Aktuatorelement gemäß einem der Ansprüche 1 bis 3,
wobei das Formschlusselement (31a-f) mit dem Ausgangskolben (10) in formschlüssigen Eingriff bringbar ist, so dass die Translation des ersten Antriebselementes (20) eine Translation des Ausgangskolbens (10) hervorruft.

5. Aktuatorelement gemäß einem der Ansprüche 2 bis 4,
wobei das erste Antriebselement (20) ausgebildet ist als eine Hohlspindel; und wobei der Ausgangskolben (10) im inneren Hohlraum der Hohlspindel angeordnet ist.

6. Aktuatorelement gemäß Anspruch 5,
wobei in der ersten Position des Halteelementes (33) ein Formschluss zwischen dem Ausgangskolben (10) und der Kugelgewindespindel (20) bereitgestellt ist; und wobei in der zweiten Position des Halteelementes (33) der Formschluss zwischen dem Ausgangskolben (10) und der Kugelgewindespindel (20) gelöst und die Abgangswelle (10) im Inneren der Kugelgewindespindel (20) im Wesentlichen frei verschiebbar ist.

7. Aktuatorelement gemäß einem der vorhergehenden Ansprüche, weiterhin aufweisend
ein Gehäuse (44a,b); und
eine Dichtelementeanordnung (34a,b), derart eingerichtet, so dass der Bereich von Formschlusselement (31a-f), Halteelement (33), Ausgangskolben (10) und Gehäuse (44a,b) im Wesentlichen dicht ausgebildet ist, so dass insbesondere der Bereich mit einem geeigneten Schmiermittel füllbar ist.

8. Aktuatorelement gemäß einem der Ansprüche 4 bis 7,
wobei einer der Anbindungspunkte (5a,b) an einem Ende des Gehäuses (44a,b) des Aktuatorelementes (3) angeordnet ist; und
wobei der weitere Anbindungspunkt (5b,a) am außenliegenden Ende des Ausgangskolben (10) angeordnet ist.

9. Aktuatorelement gemäß einem der vorhergehenden Ansprüche,
wobei alle Anschlüsse des Elements, jeweils umfassend Anschlüsse zur Leistungsübertragung sowie zur Übertragung von Sensorsignalen von/zur zugehörigen Steuerung/Überwachung, im stationären Teil des Elements angebracht sind, so dass eine Bewegung des beweglichen Teils der Entkoppelvorrichtung keine Beweglichkeit von leitfähigen Verbindungen bedingt.

10. Aktuatoranordnung (70), aufweisend
zumindest zwei Aktuatorelemente (3) gemäß einem der vorhergehenden Ansprüche, wobei die zumindest zwei Aktuatorelemente (3) kraftparallel angeordnet sind, so dass eine Längenveränderung der Aktuatoranordnung (70) von einem Aktuatorelement (3) allein oder von beiden Aktuatorelementen (3) parallel bewirkbar ist.

11. Aktuatoranordnung gemäß Anspruch 10,
wobei die Entkopplungsvorrichtung (6) im Falle eines Defektes einer Antriebseinheit eines Aktuatorelementes (3) den Entkopplungsmechanismus dieses Aktuatorelementes (3) auslöst, so dass das Aktuatorelement (3) funktional entkoppelt wird;
wobei die Längenveränderung der Aktuatoranordnung (70) weiterhin vom nicht entkoppelten Aktuatorelement (3) bewirkbar ist.

12. Luftfahrzeug, insbesondere Flugzeug oder Helikopter, aufweisend ein Aktuatorelement (3) gemäß einem der Ansprüche 1 bis 9; und/oder eine Aktuatoranordnung (70) gemäß einem der Ansprüche 10 oder 11, zum Antrieb eines aerodynamisch wirksamen Elementes (72b).

## Claims

1. Actuator element (3), having
a drive unit, having
a first drive element (20) and a second drive element (8b);
the first drive element (20) and the second drive element (8b) interacting functionally in such a way as to bring about a length change of the actuator element (3);
the actuator element (3) having a decoupling apparatus (6),
the actuator element (3) having two attachment points (5a, b), the spacing of which can be fixed by way of the length change of the actuator element (3);
one of the attachment points (5a, b) being connected fixedly to the housing of the actuator element;
the actuator element (3) having an output piston (10), and the second attachment point being attached via the output piston (10) and being connected via the latter to the drive unit;
it being possible for the spacing of the two attachment points (5a, b) in the coupled state of the decoupling apparatus (6) to be set by way of the actuator element (3); and
it being possible for the spacing of the two attachment points (5a, b) in the decoupled state of the decoupling apparatus (6) to be changed by way of force loading of the attachment points (5a, b) from the outside,
the decoupling apparatus (6) having
a decoupling mechanism with a drive element (50), a positively locking element (31a-f) and a holding element (33) ;
the holding element (33) being set up to assume a first position, in which the positively locking element (31a-f) is in a closed state;
the holding element (33) being set up to assume a second position, in which the positively locking element (31a-f) is in an open state;
the drive element (50) being set up to shift the holding element (33) between the first position and the second position, as a result of which the positively locking connection of the positively locking element (31a-f) can be released and fixed reversibly;
the decoupling mechanism decoupling the output piston (10) functionally from a drive element (8b, 20) of the actuator element (3), with the result that the length change of the actuator element (3) is made possible independently of the drive unit, in particular without functional decoupling of the first drive element (20) and the second drive element (8b),
**characterized in that**
the positively locking element (31a-f) is configured as a plurality of ball elements;
the output piston (10) having depressions (67) which correspond to the ball elements (31a-f);
the holding element (33) being configured as a sleeve element with depressions (33a-f);
it being possible for the sleeve element (33) to be rotated with the use of the drive element (50);
the sleeve element (33) being set up in the first position to hold the positively locking elements (31a-f) in the depressions (67) of the output piston (10) in order to provide the positively locking connection between the output piston (10) and the ball screw spindle (20); and the sleeve element (20) being set up in the second position to receive the positively locking elements (31a-f) in the depressions (33a-f) of the sleeve element (33), with the result that the positively locking connection is released.

2. Actuator element according to Claim 1,
the drive unit being configured as a ball screw drive, the first drive element (20) and the second drive element (8b) being configured as a ball screw spindle and a ball screw nut of a ball screw drive.

3. Actuator element according to Claim 2, having, furthermore,
a motor element (1), it being possible for the ball screw nut (8b) to be rotated with the use of the motor element (1), as a result of which a length change of the actuator element (3) can be carried out by way of translation of the ball screw spindle (20).

4. Actuator element according to one of Claims 1 to 3, it being possible for the positively locking element (31a-f) to be brought into positively locking engagement with the output piston (10), with the result that the translation of the first drive element (20) brings about a translation of the output piston (10).

5. Actuator element according to one of Claims 2 to 4, the first drive element (20) being configured as a hollow spindle; and
the output piston (10) being arranged in the inner cavity of the hollow spindle.

6. Actuator element according to Claim 5,
a positively locking connection between the output piston (10) and the ball screw spindle (20) being provided in the first position of the holding element (33); and
the positively locking connection between the output piston (10) and the ball screw spindle (20) being released in the second position of the holding element (33), and it being possible for the output shaft (10) to be displaced substantially freely in the interior of the ball screw spindle (20).

7. Actuator element according to one of the preceding claims, having, furthermore,
a housing (44a, b); and
a sealing element arrangement (34a, b), set up such that the region of the positively locking element (31a-f), the holding element (33), the output piston (10) and the housing (44a, b) is of substantially sealed configuration, with the result that, in particular, the region can be filled with a suitable lubricant.

8. Actuator element according to one of Claims 4 to 7, one of the attachment points (5a, b) being arranged at one end of the housing (44a, b) of the actuator element (3); and
the further attachment point (5b, a) being arranged at the outer end of the output piston (10).

9. Actuator element according to one of the preceding claims, all of the connectors of the element, in each case comprising connectors for power transfer and for the transmission of sensor signals from/to the associated controller/monitoring means, being attached in the stationary part of the element, with the result that a movement of the movable part of the decoupling apparatus does not require a movability of conductive connections.

10. Actuator arrangement (70), having
at least two actuator elements (3) according to one of the preceding claims, the at least two actuator elements (3) being arranged in parallel in force terms, with the result that a length change of the actuator arrangement (70) can be brought about by one actuator element (3) alone or by the two actuator elements (3) in parallel.

11. Actuator arrangement according to Claim 10, the decoupling apparatus (6) triggering, in the case of a defect of a drive unit of an actuator element (3), the decoupling mechanism of the said actuator element (3), with the result that the actuator element (3) is decoupled functionally;
it being possible, furthermore, for the length change of the actuator arrangement (70) to be brought about by the actuator element (3) which is not decoupled.

12. Aircraft, in particular aeroplane or helicopter, having an actuator element (3) according to one of Claims 1 to 9; and/or an actuator arrangement (70) according to either of Claims 10 and 11, for driving an aerodynamically active element (72b).

## Revendications

1. Élément actionneur (3) comprenant
une unité d'entraînement, comprenant un premier élément d'entraînement (20) et un deuxième élément d'entraînement (8b) ;
dans lequel le premier élément d'entraînement (20) et le deuxième élément d'entraînement (8b) coopèrent fonctionnellement afin de provoquer une modification de longueur de l'élément actionneur (3) ;
dans lequel l'élément actionneur (3) comprend un dispositif de découplage (6),
dans lequel l'élément actionneur (3) comprend deux points de liaison (5a,b) dont l'écartement peut être fixé par la modification de longueur de l'élément actionneur (3) ;
dans lequel l'un des points de liaison (5a,b) est connecté solidement au boîtier de l'élément actionneur ;
dans lequel l'élément actionneur (3) comprend un piston de sortie (10) et le deuxième point de liaison est relié par le biais du piston de sortie (10) et est connecté en outre à l'unité d'entraînement ;
dans lequel l'écartement des deux points de liaison (5a,b) à l'état couplé du dispositif de découplage (6) peut être réglé au moyen de l'élément actionneur (3) ; et
dans lequel l'écartement des deux points de liaison (5a,b) à l'état découplé du dispositif de découplage (6) peut être modifié depuis l'extérieur par une application de force sur les points de liaison (5a,b),
le dispositif de découplage (6) comprenant
un mécanisme de découplage doté d'un élément d'entraînement (50), d'un élément de complémentarité de forme (31a-f) et d'un élément de retenue (33) ;
dans lequel l'élément de retenue (33) est conçu pour adopter une première position dans laquelle l'élément de complémentarité de forme (31a-f) est dans un état fermé ;
dans lequel l'élément de retenue (33) est conçu pour adopter une deuxième position dans laquelle l'élément de complémentarité de forme (31a-f) est dans un état ouvert ;
dans lequel l'élément d'entraînement (50) est conçu pour déplacer l'élément de retenue (33) entre la première position et la deuxième position, de sorte que la complémentarité de forme de l'élément de complémentarité de forme (31a-f) puisse être libérée et fixée de manière réversible ;
dans lequel le mécanisme de découplage découple le piston de sortie (10) fonctionnellement d'un élément d'entraînement (8b, 20) de l'élément actionneur (3), de sorte que la modification de longueur de l'élément actionneur (3) soit rendue possible indépendamment de l'unité d'entraînement, en particulier sans découplage fonctionnel du premier élément d'entraînement (20) et du deuxième élément d'entraînement (8b),
**caractérisé en ce que**
l'élément de complémentarité de forme (31a-f) est réalisé sous la forme d'une pluralité d'éléments billes ;
le piston de sortie (10) comprenant des évidements (67) correspondant aux éléments billes (31a-f) ;
l'élément de retenue (33) étant réalisé sous forme d'élément douille doté d'évidements (33a-f) ;
l'élément douille (33) pouvant être entraîné en rotation en utilisant l'élément d'entraînement (50) ;
l'élément douille (33) étant conçu pour, dans la première position, retenir les éléments de complémentarité de forme (31a-f) dans les évidements (67) du piston de sortie (10) pour produire la complémentarité de forme entre le piston de sortie (10) et une broche de vis à billes (20) ; et
l'élément douille (20) étant conçu pour, dans la deuxième position, recevoir les éléments de complémentarité de forme (31a-f) dans les évidements (33a-f) de l'élément douille (33), de telle sorte que la complémentarité de forme soit libérée.

2. Élément actionneur selon la revendication 1,
dans lequel l'unité d'entraînement est réalisée sous forme de vis d'entraînement à billes, dans lequel le premier élément d'entraînement (20) et le deuxième élément d'entraînement (8b) sont réalisés sous forme de broche de vis à billes et d'écrou de vis à billes d'une vis d'entraînement à billes.

3. Élément actionneur selon la revendication 2, comprenant en outre
un élément de moteur (1),
dans lequel l'écrou de vis à billes (8b) peut être entraîné en rotation en utilisant l'élément de moteur (1), de sorte qu'une modification de longueur de l'élément actionneur (3) puisse être effectuée par translation de la broche de vis à billes (20).

4. Élément actionneur selon l'une des revendications 1 à 3,
dans lequel l'élément de complémentarité de forme (31a-f) peut être amené en prise par complémentarité de forme avec le piston de sortie (10), de telle sorte que la translation du premier élément d'entraînement (20) provoque une translation du piston de sortie (10).

5. Élément actionneur selon l'une des revendications 2 à 4,
dans lequel le premier élément d'entraînement (20) est réalisé sous forme de broche creuse ; et
dans lequel le piston de sortie (10) est disposé dans la cavité intérieure de la broche creuse.

6. Élément actionneur selon la revendication 5,
dans lequel, dans la première position de l'élément de retenue (33), une complémentarité de forme entre le piston de sortie (10) et la broche de vis à billes (20) est produite ; et
dans lequel, dans la deuxième position de l'élément de retenue (33), la complémentarité de forme entre le piston de sortie (10) et la broche de vis à billes (20) est libérée et l'arbre de sortie (10) peut coulisser sensiblement librement à l'intérieur de la broche de vis à billes (20).

7. Élément actionneur selon l'une des revendications précédentes, comprenant en outre
un boîtier (44a,b) ; et
un ensemble d'éléments d'étanchéité (34a,b), conçu de telle sorte que la région de l'élément de complémentarité de forme (31a-f), de l'élément de retenue (33), du piston de sortie (10) et du boîtier (44a,b) est réalisée de manière sensiblement étanche, de telle sorte que la région puisse en particulier être remplie d'un lubrifiant approprié.

8. Élément actionneur selon l'une des revendications 4 à 7,
dans lequel l'un des points de liaison (5a,b) est disposé à une extrémité du boîtier (44a,b) de l'élément actionneur (3) ; et
dans lequel l'autre point de liaison (5b,a) est disposé à l'extrémité extérieure du piston de sortie (10).

9. Élément actionneur selon l'une des revendications précédentes,
dans lequel toutes les connexions de l'élément, comportant respectivement les connexions pour la transmission de puissance ainsi que pour la transmission de signaux de détection vers le dispositif de commande/surveillance associé ou en provenance de celui-ci sont installées dans la partie fixe de l'élément, de telle sorte qu'un déplacement de la partie mobile du dispositif de découplage ne nécessite aucune mobilité de connexions conductrices.

10. Ensemble d'actionnement (70), comprenant
au moins deux éléments actionneurs (3) selon l'une des revendications précédentes,
dans lequel lesdits au moins deux éléments actionneurs (3) sont disposés parallèlement en termes de force de telle sorte qu'une modification de longueur de l'ensemble d'actionnement (70) puisse être provoquée par un élément actionneur (3) isolément ou par les deux éléments actionneurs (3) en parallèle.

11. Ensemble d'actionnement selon la revendication 10,
dans lequel le dispositif de découplage (6) déclenche, en cas de défaillance d'une unité d'entraînement d'un élément actionneur (3), le mécanisme de découplage de cet élément actionneur (3), de telle sorte que l'élément actionneur (3) soit découplé fonctionnellement ;
dans lequel la modification de longueur de l'ensemble d'actionnement (70) peut en outre être provoquée par l'élément actionneur (3) non découplé.

12. Aéronef, en particulier avion ou hélicoptère, comprenant un élément actionneur (3) selon l'une des revendications 1 à 9 ; et/ou un ensemble d'actionnement (70) selon l'une la revendication 10 ou 11, pour l'entraînement d'un élément à action aérodynamique (72b).
